# EUROPEAN PATENT APPLICATION

(11) **EP 1 134 953 A2**
(43) Date of publication of application: **19.09.2001**
(21) Application number: 01302403.9
(22) Date of filing: 15.03.2001
(51) Int. Cl.: H04L 29/06

(54) **Control system for network servers**

(30) Priority: 15.03.2000 GB 0006097
(71) Applicant: Pace Micro Technology PLC, Saltaire, Shipley, BD18 3LF (GB)
(72) Inventor: Brodie, Stewart, Saltaire, Shipley BD18 3LF (GB); Bracey, Kevin, Saltaire, Shipley BD18 3LF (GB)
(74) Representative: Wood, Graham

(57) **Abstract**

A system is provided for the generation and transmission of data to a number of items of electrical apparatus, such as broadcast data receivers. The system comprises a network to which a number of servers are connected. The servers are controlled to issue data for distribution through the network to the broadcast data receivers. On the basis of the data received, the broadcast data receivers adopt an operating configuration. The broadcast data receivers are provided with memory which is adapted to identify when incorrect data is issued by a server and identify the particular server or servers which issued the data.

## Description

The invention to which this application relates is to improvements in a control system for a series of servers which are provided as part of a server network provided particularly, but not necessarily exclusively, to supply information to electrical apparatus which is required by said apparatus to receive same.

In one example, there is typically provided an electronic information supply network which provides information and data to a plurality of electrical apparatus such as a series of broadcast data receivers. These broadcast data receivers are provided to allow data which is broadcast from a remote location to be decoded and processed into video, audio and/or text which is displayed on a display screen, such as that of a television set, to a user of the apparatus in a premises. The receivers are required to be configured in a particular manner in order to allow the same to operate in a uniform manner and to be able to process the data which is received from the remote locations .There is also a need for the receiver configuration to be updated from time to time.

In order to allow the configuration of the receivers to be controlled, information is provided and transmitted to the same via communication network which utilises what is known as a Dynamic Host Configuration Protocol (DHCP). The network typically includes a plurality of servers which supply the configuration information to the receivers via the network. In practice, if there are a number of servers in the network issuing the configuration information and one, or more, of the servers is issuing information which is incorrect, one of the other servers can indicate to the receiver that the data received from a specified server is invalid and should be discarded. In response to that, the receiver deletes the configuration which has been set up on the basis of the information received and reattempts to obtain the configuration information from the network, but it is likely that the same server which is emitting the incorrect information is accessed and so the system goes into a loop condition in which the receiver continues to obtain incorrect information, deletes the same and then starts again.

The aim of the present invention is to provide a network system whereby if a server introducing information onto the network is found to be introducing incorrect information the same is disregarded.

In a first aspect of the invention there is provided a system for the generation and transmitting of data to a number of items of electrical apparatus, said system comprising a network to which a number of servers are connected, said servers controlled to issue data for distribution through the network to the number of items of electrical apparatus and, on the basis of the data, said electrical items adopt an operating configuration and characterised in that said system further includes memory means which is adapted to identify when incorrect data is issued by a server or servers and identify the server(s) from which the said data issued.

In one embodiment each of the items of electrical apparatus is a broadcast data receiver which is provided for the reception of data which is broadcast from a remote location, and for the processing of said data to generate audio video and/or text.

In a preferred embodiment each of the receivers is provided with a memory means in accordance with the invention. When data is received from the network and a signal is sent to the receiver to indicate that the data received is incorrect the data is deleted and the configuration of the receiver changed back to the configuration prior to receipt of the incorrect data. However in accordance with the invention an additional step is undertaken inasmuch that the details of the server which issued the incorrect data to the network and hence receiver is stored in that receiver memory means. Thus, when the receiver again searches for the required data from the network, if it is offered data from a server which is identified in the memory means the receiver declines to accept the data and searches for the data from another of the servers. This therefore ensures that the receiver obtains data from the network which is correct and as a result the configuration of the receiver is correct.

In a further feature of the invention, if one of the receivers identifies that the data received is incorrect and the server is identified, a signal is transmitted from the server or a separate control, around the network such that memory means in each of the receivers receives data which identifies the malfunctioning server and so subsequently each of the receivers refuses to accept the data from the identified server or servers.

It is envisaged that a server which issues incorrect data will in due course be corrected and when this occurs a "clear" signal can be generated to the receivers to clear the server details from the memory means so that the receivers will once more accept data from the server. However it is envisaged that until the clear signal is received the memory means will act as a historical record of the server or servers from which data should not be accepted.

A specific embodiment of the invention is now described with reference to the accompanying drawings, wherein
Figure 1 illustrates a schematic diagram of the network components in accordance wit the invention;
Figure 2 illustrates a segment of memory means in which a record of communications between servers and receivers is maintained..

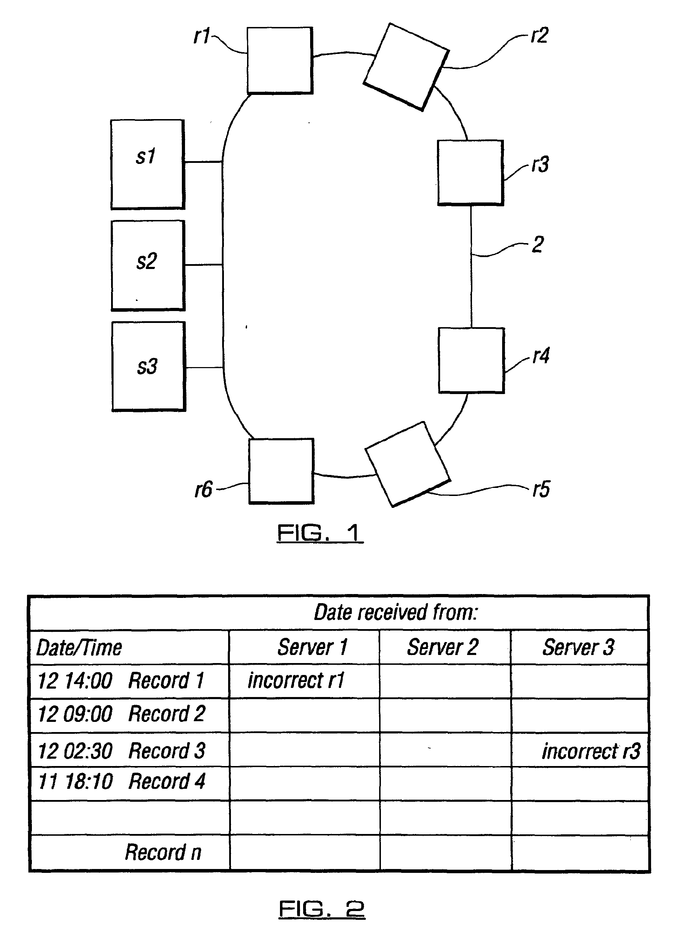

The network 2 as shown in Figure 1 and herein described has particular uses with respect to a network comprising a number of servers S1, S2, S3 and each of the servers can be controlled to issue what should be the same data into the network. The network also includes a number of broadcast data receivers r1, r2, r3, r4, r5, r6, rn. to which the data from the servers is intended to be transferred. The transmission of the data can be for updating, changing or otherwise amending the operation of a series of clients in the form of the broadcast data receivers connected to the network and hence in turn to the servers. Typically each broadcast data receiver is located in a different premises of a subscriber to a television system and the servers are controlled and operated by the service provider and the data is transferred via a communications link to which each of the broadcast data receivers is connected.

At any one time, each of the servers can be providing data to one of the receivers and those receivers which require the data electronically search the network for a free and available server. The data which is received can be used to configure and/or alter the configuration of the receiver apparatus.

The operation of the servers and receivers in accordance with the invention is now described. Each of the Broadcast data receivers uses the conventional DHCP protocol (RFC2131 and RFC2132) to establish its Internet Protocol (IP) address and other network configuration information. To do this the receiver broadcasts what are known as DHCPDISCOVER messages. The DHCP client software which runs on the receiver collects the DHCPOFFER messages which are in turn issued by available servers on the network at that time.

Upon receiving one or a number of the DHCPOFFER messages, the DHCP software control on the receiver selects one of the available servers. The selection can be on the basis of a number of criteria which can be predetermined in accordance with particular system requirements and sends to the selected receiver a DHCPREQUEST message to the selected server. The chosen server then responds with a DHCPACK(knowledge) signal and the communication between the server and receiver is completed.

The other servers in the network can be used to monitor all the transmissions from the other servers on the network. If one of the servers determines, perhaps due to a comparison between the data it is transmitting at that time with the data transmitted by the chosen server, that the chosen server has issued data which is incorrect then it sends to the receiver to which the data has been sent, what is referred to as a DHCPNAK signal to indicate that the receiver should disregard the data received from the chosen server and return to broadcasting the DHCPDISCOVER message to identify another alternative server.

However in convention operation of the system, when the receiver retries it is highly likely that the same sequence of events will occur and that the receiver will again choose the previously chosen and malfunctioning server as the criteria used for selection remain unchanged from when the initial choice was made. This means that the receiver is likely to once more receive incorrect data, another server will issue a DHCPNAK signal and so the loop starts again and the receiver is never configured correctly.

In accordance with the invention a new criteria is introduced which is the analysis of whether the DHCPOFFER message which is issued to the receiver, is issued by a server which has already been chosen by the receiver on a previous attempt. These details are held in memory means typically included in each of the receivers and which include an indication as to whether on the previous attempt a DHCPNAK signal was received by the receiver from another server. Figure 2 illustrates a segment of a memory means data transfer record in which it is indicated that record 1, the record of the most recent transmission of data, led to an incorrect message being transmitted between server s1 and receiver r1. This means that receiver r1 would then not accept a data offer from server s1 next time. The record also shows that the data transfers of records 2 and 4 were performed correctly while record 3 indicates that the server s3 had an incorrect data transmission on record 3 which would indicate to the receivers not to accept a data offer from servers s1 or s3 until a clear signal is generated to indicate that one or both servers have been fixed.

Thus if there is an indication of an incorrect data transmission the receiver will no longer accept the DHCPOFFER message from that server. If there is no indication then the receiver will accept the DHCPOFFER message.

This analysis prevents the receiver from accepting the new DHCPOFFER signal from a server which has already emitted incorrect data and leads to the receiver accepting the data from another server which has issued the DHCPOFFER signal.

It is possible that in practice the next accepted server may also provide incorrect data and if this is the case the newly selected server will be added to the memory means and the process of seeking and selecting a server is repeated with, on this occasion, two of the servers being declined.

Thus in practical terms if the network has "n" servers and, of these, a number "f" are issuing incorrect data, the receiver will require, at worst "f+1" attempts to identify and receive data issued by an acceptable server whereas in the conventional system, the number of attempts was unbounded as the receiver could continue to use the same server and receive incorrect data each time.

A practical example is now described with reference to the accompanying diagram. A DHCP receiver r1 requires configuration data from the network and upon issuing the DHCPDISCOVER message receives two responses, from server s1 and server s2 with DHCPOFFER messages. The receiver chooses the offer from s1 and is issued an IP address by s1 and receives data. However s2 monitors the data in the form of the IP address an, upon comparison with the correct data, identifies that the IP address data which s1 has offered lies within the range of addresses which is administered exclusively by s2. s2 then issues a DHCPNAK message which tells the receiver to ignore the information from s1. Furthermore in accordance with the invention a record is entered into memory means so that the receiver remembers or can identify from the memory means that the information data from s1 was bad. The receiver then restarts the operation of seeking a server. On the next attempt the receiver receives offers from both s1 and s2 again but on this occasion selects the offer from s2 because it remembers that s1 issued faulty information the previous time.

In accordance with the invention if all of the servers are issuing incorrect data or a signal is received to indicate that a previously faulty server has been fixed, the receiver will clear the whole memory means of faulty servers or clear selected servers as appropriate.

## Claims

1. A system for the generation and transmission of data to a number of items of electrical apparatus, said system comprising a network (2) to which a number of servers are connected, said servers controlled to issue data for distribution through the network to the number of items of electrical apparatus and, on the basis of the data, said electrical items adopt an operating configuration **characterised in that** said system further includes memory means which is adapted to identify when incorrect data is issued by a server or servers and identify the server(s) from which the data is issued.

2. A system according to claim 1 **characterised in that** each of the items of electrical apparatus is a broadcast data receiver.

3. A system according to claim 2 **characterised in that** each broadcast data receiver in the system is provided with memory means.

4. A system according to claim 3 **characterised in that** when incorrect data is issued by a server a signal is generated by the system identifying the server issuing the incorrect data and sent to the broadcast data receivers for storage in said memory means.

5. A system according to claim 4 **characterised in that** if a receiver is sent data from a server which is identified in said memory means, the receiver declines to accept said data.

6. A system according to claim 5 **characterised in that** if a receiver declines to accept data from a particular server in the network (2), the receiver searches for data from another server in the network.

7. A system according to claim 4 **characterised in that** when the receiver identifies data from a particular server as being incorrect, a signal is generated by the system and transmitted around the network such that the memory means in each of the receivers has data which identifies the particular server.

8. A system according to claim 4 **characterised in that** the signal informing the broadcast data receiver of incorrect data being sent from a server is issued from a further server of the system.

9. A system according to claim 5 **characterised in that** when the server issuing incorrect data is corrected to issue correct data, a signal is generated by the system for receipt by the receivers to clear the server details from the memory means.
